# EUROPÄISCHE PATENTSCHRIFT

(11) **EP 0 938 629 B1**
(45) Veröffentlichungstag und Bekanntmachung des Hinweises auf die Patenterteilung: **11.02.2004**
(21) Anmeldenummer: 98948724.4
(22) Anmeldetag: 04.08.1998
(51) Int. Cl.: F02P 5/152

(54) **VERFAHREN ZUR BESTIMMUNG DES ZÜNDWINKELS IN ZÜNDANLAGEN FÜR BRENNKRAFTMASCHINEN**
METHOD FOR DETERMINING THE ADVANCE IGNITION ANGLE IN INTERNAL COMBUSTION ENGINE IGNITION SYSTEMS
PROCEDE POUR DETERMINER L'ANGLE D'ALLUMAGE DANS DES SYSTEMES D'ALLUMAGE DE MOTEURS A COMBUSTION INTERNE

(30) Priorität: 13.09.1997 DE 19740365
(43) Veröffentlichungstag der Anmeldung: 01.09.1999
(73) Patentinhaber: ROBERT BOSCH GMBH, 70442 Stuttgart (DE)
(72) Erfinder: UNLAND, Stefan, D-71665 Vaihingen (DE); TORNO, Oskar, D-71701 Schwieberdingen (DE); SLOBODA, Robert, Yokohama 223 (JP); HAEMING, Werner, D-74861 Neudenau (DE); SURJADI, Iwan, D-71665 Vaihingen (DE); BÄUERLE, Michael, D-71706 Markgröningen (DE); FRANKE, Steffen, D-71701 Schwieberdingen (DE)
(86) Internationale Anmeldenummer: PCT/DE1998/002240
(87) Internationale Veröffentlichungsnummer: WO 1999/014488

(56) Entgegenhaltungen:
- US-A- 4 268 910
- US-A- 5 411 000
- US-A- 5 645 034

## Beschreibung

### Stand der Technik

Die Erfindung geht aus von einem Verfahren zur Bestimmung der Steuergrößen sich zyklisch wiederholender Vorgänge in Brennkraftmaschinen. Aus boschtechnischer Unterrichtung, kombiniertes Zünd- und Benzineinspritzsystem Motronik (1987722011, KH/VDT-09.85-DE) sind Steuergeräte mit einem integrierten Verfahren zur Bestimmung der Zündsteuergrößen bekannt. Das Steuergerät bestimmt hierbei zwischen zwei Zündvorgängen aus den Informationen Last- und Drehzahl, Temperatur- und Drosselklappenstellung, die Steuergrößen, wie Schließwinkel und Zündwinkel bzw. Zündzeitpunkt. Hierbei werden die Steuergrößen von abgespeicherten Kennfeldern bestimmt, wobei das Kennfeld zur Bestimmung des Zündwinkels durch Versuche auf einem Motorprüfstand ermittelt wird. Im Fahrzeug wird dieses Kennfeld dann nach den vorgebbaren Kriterien wie Kraftstoffverbrauch, Abgas- und Fahrverhalten optimiert und anschließend gespeichert. Anhand der aktuellen Betriebsparameter wird dann der Zündwinkel aus dem Kennfeld entnommen und kann an verschiedene Betriebsbedingungen angepaßt werden. So läßt sich z. B. im Leerlauf die Zündung auf günstige Abgaswerte, einwandfreien Rundlauf und geringen Verbrauch einstellen, während im Teillastbereich das Fahrverhalten und der Kraftstoffverbrauch im Vordergrund stehen. Die Anpassung des Zündwinkels individuell an jeden Betriebszustand des Motors ermöglicht es, den spezifischen Anforderungen des Motors in hohem Maße Rechnung zu tragen. Hierbei ist es möglich, den Zündwinkel durch Beaufschlagung mit einer Momentenschnittstelle speziell an die konkreten Anforderungen an das Drehmoment der Brennkraftmaschine anzupassen. Weiterhin ist es bekannt aus z.B. US 5 645 034, bei der Zündsteuerung eine Klopfregelung zu integrieren, die den Zündwinkel nach auftretendem Klopfen nach spät verstellt und anschließend, wenn kein Klopfen mehr auftritt, schrittweise zurückführt an den Kennfeldzündwinkel. Damit wird der klopfende Betrieb der Brennkraftmaschine vermieden, wodurch die Lebenserwartung der Brennkraftmaschine wesentlich erhöht wird.

### Vorteile der Erfindung

Das erfindungsgemäße Verfahren zur Bestimmung des Zündwinkels in Zündanlagen für Brennkraftmaschinen mit integrierter Klopfregelung hat den Vorteil, daß bei der Zündwinkelbestimmung die Vorteile der Optimierung des Zündwinkels an das Solldrehmoment mit der Klopfregelung kombiniert werden können. Hierbei wird die Frühverstellung und Adaption der Klopfregelung gesperrt, wenn die Zündwinkelreduzierung durch die Drehmomentenschnittstelle erfolgte, da in diesem Fall der ausgegebene Zündwinkel nicht durch die Klopfregelung, sondern durch die Momentenschnittstelle bestimmt wurde. Da dieser von der Momentenschnittstelle ausgegenene Zündwinkel später liegt als Zündwinkel der Klopfregelung wird vorteilhafterweise in diesem Fall die Frühverstellung der Klopfregelung eingefroren. Damit ist gewährleistet, daß auch bei integrierter Klopfregelung und Drehmomentoptimierung des Zündwinkels ein möglichst klopffreier Betrieb der Brennkraftmaschine gewährleistet ist.

Durch die in den Unteransprüchen aufgeführten Maßnahmen sind vorteilhafte Weiterbildungen und Verbesserungen des erfindungsgemäßen Verfahrens gegeben.

So kann der spätestmögliche Zündwinkel vorteilhafterweise anhand der Betriebsparameter aus einem Kennfeld entnommen werden. Dabei kann der spätestmögliche Zündwinkel im Kennfeld applikationsspezifisch festgelegt werden oder systemabhängig bestimmt werden.

### Zeichnung

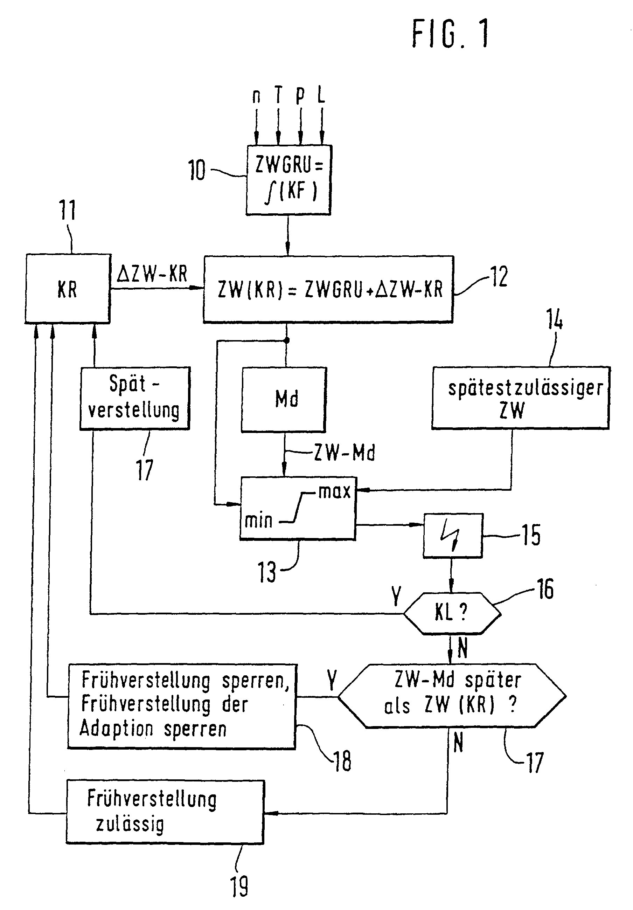

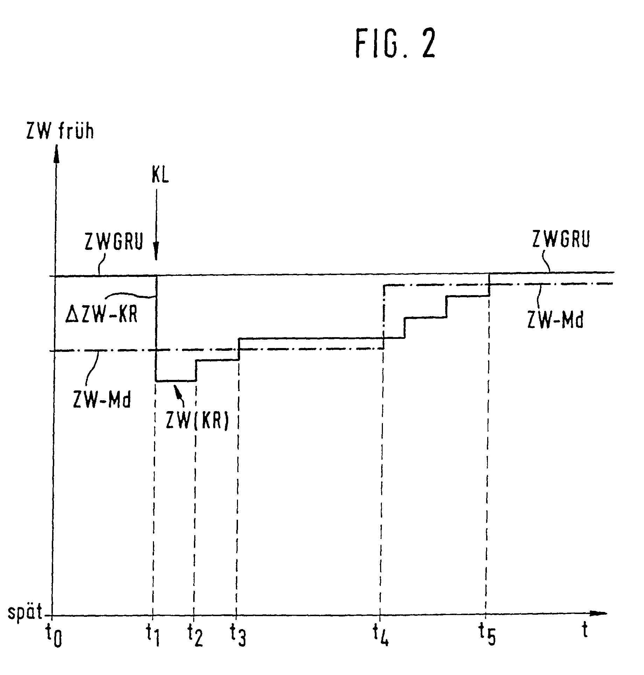

Ausführungsbeispiele der Erfindung sind in der Zeichnung dargestellt und in der nachfolgenden Beschreibung näher erläutert. Figur 1 zeigt im Programmablaufplan die einzelnen Verfahrensschritte zur Durchführung des erfindungsgemäßen Verfahrens und Figur 2 zeigt in einem Zündwinkel-Zeit-Diagramm die Beziehungen der verschiedenen Zündwinkel untereinander.

### Beschreibung des Ausführungsbeispiele

Die Figur 1 zeigt die einzelnen Verfahrensschritte der erfindungsgemäßen drehmomentenoptimierten Klopfregelung, die zylinderindividuell durchgeführt werden und wobei in einem ersten Verfahrensschritt 10 der Grundzündwinkel ZWGRU anhand der Betriebsparameter wie Drehzahl n, Temperatur T und Druck p mittels eines abgespeichherten Kennfeldes KF bestimmt wird, so daß der Grundzündwinkel ZWGRU eine Funktion des Kennfeldes KF ist. In einem Arbeitsschritt 11, der die Klopfregelung KR darstellt, wird beim Erkennen eines Klopfens KL nach einer ausgelösten Verbrennung ein Korrekturwert ΔZW-KR bestimmt, der dann im Arbeitsschritt 12 auf den Grundzündwinkel ZWGRU aufaddiert wird, damit ergibt sich der Klopfregelzündwinkel ZW(KR) = ZWGRU+ ΔZW-KR. Diese additive Korrektur des Grundzündwinkels in der Klopfregelung bewirkt ein Spätziehen des Zündwinkels und damit von der Klopfgrenze weg.

Dieser Klopfregelzündwinkel ZW(KR) wird nun zum einen über eine Momentenschnittstelle MD an eine Begrenzungsstufe 13 und zum anderen direkt an die Begrenzungsstufe 13 geführt. Die Momentenschnittstelle stellt einen Zweig dar, der unabhängig davon, ob Klopfen aufgetreten ist oder nicht anhand der aktuellen Betriebsbedingungen und der vom Fahrer gestellten Anforderungen beispielsweise Maximallast einen drehmomentenoptimierten Zündwinkel ZW-Md bestimmt. Der drehmomentenoptimierte Zündwinkel ZW-Md ist ebenso wie der Zündwinkel aus der Klopfregelung ZW(KR) an die Begrenzungsstufe 13 geführt. Diese Begrenzungsstufe 13 begrenzt den Zündwinkel für die nächste Verbrennung in einem zulässigen Band, wobei an die Begrenzungsstufe 13 außerdem noch der in einem Arbeitsschritt 14 bestimmte spätestzulässige Zündwinkel Zwₛₚₐₑ geführt ist. Dieser spätestzulässige Zündwinkel Zwₛₚₐₑ ergibt sich hierbei beispielsweise aus der vorgebbaren Abgastemperaturbegrenzung. Desweiteren kann dieser spätestzulässige Zündwinkel Zwₛₚₐₑ aus einem weiteren Kennfeld anhand der aktuellen Betriebsparameter entnommen werden. Der frühestzulässige Zündwinkel ist der von der Drehmomenten-Schnittstelle bestimmte drehmomentenoptimierten Zündwinkel ZW-Md. Damit steht der Begrenzungsstufe 13 der frühstzulässige Zündwinkel und der spätestzulässige Zündwinkel zur Verfügung, so daß der auszugebende Zündwinkel innerhalb dieses Bandes liegt.

Anschließend wird im Arbeitsschritt 15 der so bestimmte Zündwinkel ausgegeben und anschließend in einer Abfrage 16 geprüft, ob in der ausgelösten Verbrennung ein Klopfen KL aufgetreten ist. Ist dies der Fall, so führt der Ja-Ausgang zum Arbeitsschritt 17, der die Notwendigkeit eines Spätziehens des Zündwinkel an die Klopfregelung 11 weiterleitet, welche dann, wie bereits weiter oben beschrieben, einen entsprechenden Korrekturwert für die nächste Verbrennung in diesem Zylinder bestimmt. Ist kein Klopfen aufgetreten, so führt der Nein-Ausgang der Abfrage 16 an eine Abfrage 17. In der Abfrage 17 wird geprüft, ob der drehmomentenoptimierte Zündwinkel später liegt als der Zündwinkel der Klopfregelung ZW(KR). Ist dies der Fall, d.h. die Momentenschnittstelle Md hat das Drehmoment reduziert und den drehmomentenoptimierten Zündwinkel weiter nach spät verstellt als von der Klopfregelung gefordert, so führt der Ja-Ausgang der Abfrage 17 an den Arbeitsschritt 18, welcher die Frühverstellung des Klopfregelzündwinkels ZW(KR), die durch eine schrittweise Verkleinerung des Korrekturwertes ΔZW-KR erfolgt, gesperrt. Das bedeutet der augenblickliche Korrekturwert ΔZW-KR wird beibehalten, was gleichzeitig einem Sperren der Frühverstellung der Adaption entspricht. Wurde in der Abfrage 17 festgestellt, daß der drehmomentenoptimierte Zündwinkel ZW-Md früher liegt als der Zündwinkel der Klopfregelung ZW (KR), dann führt der Nein-Ausgang der Abfrage 17 an den Arbeitsschritt 19 und es wird eine schrittweise Rückfühung des Klopfregelzündwinkels in Richung Kennfeldzündwinkel zugelassen.

In Figur 2 sind die verschiedenen Zündwinkel über die Zeit dargestellt. Zum Zeitpunkt t₀ wird im Steuergerät der Grundzündwinkel ZWGRU und der drehmomentenoptimierte Zündwinkel ZW-Md bestimmt. Da zum Zeitpunkt t₀ noch kein Klopfen KL aufgetreten war, ist der Grundzündwinkel noch nicht um einen Korrekturwert der Klopfregellung korrigiert, oder anders ausgedrückt ΔZW-KR = 0. Entsprechend der Forderung, daß der drehmomentenoptimierte Zündwinkel innerhalb des begrenzenden Bandes aus frühes- und spätestzulässigem Zündwinkel liegt, wird in der Zeitspanne t₀ --> t₁ der drehmomentenoptimierte Zündwinkel ZW-Md als Zündwinkel an den entsprechenden Zylinder ausgegeben. Zum Zeitpunkt t₁ tritt ein Klopfen KL in dem Zylinder auf, damit wird der Grundzündwinkel um einen klopfregelbedingten Korrekturwert ΔZW-KR additiv korrigiert. Da der so bestimmte Klopfregelzündwinkel ZW(KR) später liegt als der drehmomentenoptimierte Zündwinkel ZW-Md wird ab dem Zeitpunkt t₁ zunächst dieser Klopfregelzündwinkel ausgegeben. Nach der so erfolgten Spätziehung des Zündwinkels wird der Zündwinkel nach einer vorgebbaren Anzahl klopffreier Verbrennungen zum Zeitpunkt t₂ schrittweise wieder in Richtung früh zum Grundzündwinkel hin verändert. Dies erfolgt, indem der nach Klopfen bestimmte Korrekturwert ΔZW-KR schrittweise verkleinert wird. Zum Zeitpunkt t₃ liegt der Klopfregellzündwinkel ZW(KR) früher im Hinblick auf den oberen Totpunkt OT als der drehmomentenoptimierte Zündwinkel ZW-Md, so daß ab dem Zeitpunkt t₃ wieder der drehmomentenoptimierte Zündwinkel ZW-Md ausgegeben wird. Die Frühverstellung des Klopfregelzündwinkels wird gesperrt, daß heißt der Korrekturwert ΔZW-KR wird solange nicht weiter verkleinert, wie der drehmomentenoptimierte Zündwinkel ZW-Md später liegt als der Klopfregelzündwinkel. Zum Zeitpunkt t₄ tritt beispielsweise eine Veränderung der Anforderungen an die Brennkraftmaschine auf, und es wird ein neuer drehmomentenoptimierter Zündwinkel ΔZW-KR bestimmt, der im Verhältnis zum vorherigen drehmomentenoptimierten Zündwinkel ΔZW-KR früher liegt und auch früher liegt als der Klopfregelzündwinkel ZW(KR), dann wird dieser Klopfregelzündwinkel ZW(KR) ausgegeben und gleichzeitig die Frühverstellung fortgeführt. Zum Zeitpunkt t₅ kehrt sich die Beziehung von drehmomentenoptimierten Zündwinkel zu Klopfregelzündwinkel wieder um, so daß die Frühverstellung wieder gesperrt wird und der drehmomentenoptimierten Zündwinkel ausgegeben wird.

Die Bewertung, ob der ausgegebene Zündwinkel der Drehmomentenschnittstelle später oder früher als der Zündwinkelwert der Klopfregelung ZW (KR) liegt, führt dazu, daß eine sehr genaue Einschätzung dessen möglich ist, ob das aufgetretene Klopfen trotz Klopfregelung oder aufgrund der Drehmomentenoptimierung aufgetreten ist. Damit ist ein noch besserer Eingriff auf das Drehmomentenverhalten bei gleichzeitiger Verhinderung von Klopfen der Brennkraftmaschine möglich.

Prinzipiell ist festzustellen, daß der Klopfregelzündwinkel ausgegeben wird und nur wenn der drehmomentenoptimierte Zündwinkel später liegt als der im Klopfregelpfad bestimmte Zündwinkel dieser drehmomentenoptimierte Zündwinkel ausgegeben wird.

## Patentansprüche

1. Verfahren zur Bestimmung des Zündwinkels in Zündanlagen für Brennkraftmaschinen mit integrierter Klopfregelung (KR), wobei ein Grundzündwinkel (ZWGRU) aufgrund ermittelter Betriebsparameter anhand eines abgespeicherten Kennfeldes (ZWGRU = f((KF)) bestimmt wird, wobei die Klopfregelung (KR) nach auftretendem Klopfen (KL) einen Klopfregelzündwinkel (ZW(KR)) bestimmt, der später liegt als der Grundzündwinkel (ZWGRU), wobei bei klopffreien Verbrennungen der Klopfregelzündwinkel (ZW(KR)) schrittweise wieder in Richtung früh verändert wird, mit einer integrierten Drehmomenten-Schnittstelle (Md), die aufgrund der Betriebsparameter und/oder vom Fahrer gewünschter Anforderungen einen drehmomentenoptimierten Zündwinkel (ZW-Md) bestimmt, wobei der Klopfregelzündwinkel (ZW(KR)) der frühestzulässige Zündwinkel ist, der vom Steuergerät ausgegeben wird, und wobei die Frühverstellung des Klopfregelzündwinkels (ZW(KR)) nach einer klopffreien Verbrennung gesperrt wird, wenn der drehmomentenoptimierte Zündwinkel (ZW-Md) später liegt als der Klopfregelzündwinkel (ZW(KR)).

2. Verfahren nach Anspruch 1, **dadurch gekennzeichnet, daß** wenn der drehmomentenoptimierte Zündwinkel (ZW-MD) später liegt als der Klopfregelzündwinkel (ZW(KR)), der drehmomentenoptimierte Zündwinkel (ZW-MD) ausgegeben wird,

3. Verfahren nach Anspruch 1 und 2, **dadurch gekennzeichnet, daß** der Klopfregelzündwinkel (ZW(KR)) mit dem drehmomentenoptimierten Zündwinkel (ZW-MD) verglichen wird.

4. Verfahren nach Anspruch 1 bis 3, **dadurch gekennzeichnet, daß** zur Spätverstellung des Grundzündwinkel (ZWGRU) nach einer klopfenden Verbrennung zur Bildung des Klopfregelzündwinkels (ZW(KR)) ein von der Klopfregelung bestimmter Korrekturwert (ΔZW-KR) auf den Grundzündwinkel (ZWGRU) aufaddiert wird.

5. Verfahren nach Anspruch 4, **dadurch gekennzeichnet, daß** zur Frühverstellung des Klopfregelzündwinkels (ZW(KR)) der Korrekturwert (ΔZW-KR) schrittweise verkleinert wird.

6. Verfahren nach Anspruch 5, **dadurch gekennzeichnet, daß**, zum Sperren der Frühverstellung der Korrekturwert (ΔZW-KR) solange beibehalten wird, wie der drehmomentenoptimierte Zündwinkel (ZW-Md) später liegt als der Klopfregelzündwinkel (ZW(KR)).

## Claims

1. Method for determining the ignition angle in ignition systems for internal combustion engines with integrated knock control (KR), a basic ignition angle (ZWGRU) being determined with reference to a stored characteristic map (ZWGRU = f((KF)) on the basis of determined operating parameters, the knock control (KR) determining, after knocking (KL) occurs, a knock-control ignition angle (ZW(KR)) which is later than the basic ignition angle (ZWGRU), in the case of knock-free combustions the knock-control ignition angle (ZW(KR)) being advanced again in steps, with integrated torque interface (Md) which determines a torque-optimized ignition angle (ZW-Md) on the basis of the operating parameters and/or of requirements desired by the driver, the knock-control ignition angle (ZW(KR)) being the earliest permissible ignition angle which is output by the control unit, and the advance of the knock-control ignition angle (ZW(KR)) after a knock-free combustion being blocked if the torque-optimized ignition angle (ZW-Md) is later than the knock-control ignition angle (ZW(KR)).

2. Method according to Claim 1, **characterized in that** the torque-optimized ignition angle (ZW-MD) is output if the torque-optimized ignition angle (ZW-MD) is later than the knock-control ignition angle (ZW(KR)).

3. Method according to Claims 1 and 2, **characterized in that** the knock-control ignition angle (ZW(KR)) is compared with the torque-optimized ignition angle (ZW-MD).

4. Method according to Claims 1 to 3, **characterized in that**, to retard the basic ignition angle (ZWGRU) after knocking combustion in order to form the knock-control ignition angle (ZW(KR)), a correction value (ΔZW-KR) determined by the knock control is added to the basic ignition angle (ZWGRU).

5. Method according to Claim 4, **characterized in that**, to advance the knock-control ignition angle (ZW(KR)), the correction value (ΔZW-KR) is reduced in steps.

6. Method according to Claim 5, **characterized in that**, to block the advance, the correction value (ΔZW-KR) is maintained as long as the torque-optimized ignition angle (ZW-Md) is later than the knock-control ignition angle (ZW(KR)).

## Revendications

1. Procédé pour la détermination de l'angle d'allumage dans des installations d'allumage pour moteurs à combustion interne avec contrôle de cognement intégré (KR), selon lequel un angle d'allumage de base (ZWGRU) est déterminé, à partir de paramètres de fonctionnement déterminés, à l'aide d'un champ caractéristique mémorisé (ZWGRU = f(KF)), selon lequel le dispositif de contrôle de cognement (KR) détermine après un cognement (KL) un angle d'allumage de contrôle de cognement (ZW (KR)) qui est postérieur à l'angle d'allumage de base (ZWGRU), selon lequel, après des explosions sans cognement, l'angle d'allumage de contrôle de cognement (ZW (KR)) est progressivement à nouveau avancé, avec une interface de couple moteur intégrée (Md) qui détermine à partir des paramètres de fonctionnement et/ou des exigences du conducteur un angle d'allumage optimisé par rapport au couple moteur (ZW-Md), selon lequel l'angle d'allumage de contrôle de cognement (ZW (KR)) est l'angle d'allumage le plus précoce autorisé qui est émis par le dispositif de commande, et selon lequel l'avancement de l'angle d'allumage de contrôle de cognement (ZW (KR)) est inhibé après une explosion sans cognement si l'angle d'allumage optimisé par rapport au couple moteur (ZW-Md) est postérieur à l'angle d'allumage de contrôle de cognement (ZW (KR)).

2. Procédé selon la revendication 1,
**caractérisé en ce que**
lorsque l'angle d'allumage optimisé par rapport au couple moteur (ZW-Md) est postérieur à l'angle d'allumage de contrôle de cognement (ZW (KR)), l'angle d'allumage optimisé par rapport au couple moteur (ZW-Md) est émis.

3. Procédé selon les revendications 1 et 2,
**caractérisé en ce que**
l'angle d'allumage de contrôle de cognement (ZW (KR)) est comparé avec l'angle d'allumage optimisé par rapport au couple moteur (ZW-Md).

4. Procédé selon les revendications 1 à 3,
**caractérisé en ce que**
pour le retardement de l'angle d'allumage de base (ZWGRU) après une explosion produisant un cognement, pour produire l'angle d'allumage de contrôle de cognement (ZW (KR)) une valeur de correction (ΔZW-KR) déterminée par le dispositif de contrôle de cognement est ajoutée à l'angle d'allumage de base (ZWGRU).

5. Procédé selon la revendication 4,
**caractérisé en ce que**
pour l'avancement de l'angle d'allumage de contrôle de cognement (ZW (KR)), la valeur de correction (ΔZW-KR) est progressivement diminuée.

6. Procédé selon la revendication 5,
**caractérisé en ce que**
pour l'inhibition de l'avancement, la valeur de correction (ΔZW-KR) est maintenue tant que l'angle d'allumage optimisé par rapport au couple moteur (ZW-Md) est postérieur à l'angle d'allumage de contrôle de cognement (ZW (KR)).
